# EUROPEAN PATENT SPECIFICATION

(11) **EP 0 638 052 B1**
(45) Date of publication and mention of the grant of the patent: **27.11.1996**
(21) Application number: 93911794.1
(22) Date of filing: 27.04.1993
(51) Int. Cl.: C04B 18/16

(54) **CONCRETE BUILDING PRODUCTS**
BETONBAUPRODUKTE
PRODUITS DE CONSTRUCTION EN BETON

(30) Priority: 29.04.1992 GB 9209233; 07.08.1992 GB 9216749; 15.09.1992 GB 9219521
(43) Date of publication of application: 15.02.1995
(73) Proprietor: BRAAS & CO. GMBH, D-6370 Oberursel 1 (DE); REDLAND TECHNOLOGIES LIMITED, Reigate, Surrey RH2 0SJ (GB)
(72) Inventor: ONABOLU, Kunle, Surrey CR7 6BZ (GB); BARKER, Howard, Anthony, Warnham West Sussex RH12 3RZ (GB); SMITH, Bernard, Easom 7 The Grange, West Sussex RH19 2LA (GB); BRAAS, Jürgen, D-6382 Friedrichsdorf (DE); DRECHSLER, Andreas, D-63500 Seligenstadt (DE); CZAPLA, Bernhard, D-3262 Anetal 2 (DE); NEUPERT, Daniel, D-8755 Alzenau (DE)
(74) Representative: Grant, John Stephen Shirley
(86) International application number: EP9301067
(87) International publication number: WO9322252

(56) References cited:
- DE-B- 1 144 169
- DE-C- 821 168
- FR-A- 2 312 467

## Description

The present invention relates to the production of concrete building products and is particularly concerned with a cementitious composition for the manufacture of concrete roof tiles which exhibit improved handling properties.

It is well known that concrete attains its ultimate strength over a period of many years, and that after one year the improvement in strength is very slow.

During the early life of concrete roof tiles, that is while the cement is setting and the concrete is hardening, care must be taken in the handling of the tiles to avoid breakage. In the preparation of concrete roof tiles, it is necessary to depallet the tiles as soon as possible so that the pallets may be re-used; however, there is a risk of an undue proportion of breakages if the tiles are taken from the pallets too early.

To reduce the risk of breakage, it is possible to add certain chemical admixtures which are known to increase the rate of set of concrete. For example, the use of chloride salts such as CaCl₂; CaCl₂+Na₂SO₄; NaCl, KCl, MgCl₂ and MnCl₂ dates back to the 1920's and more recently non-chlorine containing additives such as ligno-sulphonate derivatives and Conplast NC (the trademark given to an admixture commercially available from Fosroc CCD Ltd) have been used. However, although all of these accelerators are, to some extent, effective for promoting the setting of concrete in general, their use in concrete for roof tiles has not been found to be particularly beneficial. Coupled with this, the use of such strength accelerators increases the cost of concrete tile production.

The occurrence in the manufacture of concrete roof tiles of broken or otherwise defective tiles leads to an accumulation of waste which is difficult and expensive to dispose of. In addition, the re-roofing of dwellings adds to the problem of waste disposal. Our research has found alternative methods of waste concrete disposal. One particularly favourable method involves crushing the waste concrete and incorporating this crushed material in the production of new concrete roof tiles.

The practice of recycling crushed waste concrete is known in the prior art. For example, EP 353439 discloses the recovery of broken concrete paving stones followed by crushing and recycling the broken fragments in the production of further paving stones. JP 90040005 describes recycling concrete waste produced on destroying cement concrete structures, by utilising a mixture of the waste and blast furnace slag powder to make further concrete.

FR 2591934 describes recycling defective concrete blocks by crushing and adding to the mixture to make more concrete blocks, and JP 59045958 discloses a method of breaking down waste concrete into source material for use in further concrete.

It is also known from the prior art that the hydration of cementitious compositions can be influenced by the addition of certain nucleating agents. For example, an article published in "Concrete Precasting Plant and Technology", Issue 2, page 68, 1992, describes the addition of pozzolans, especially silica fume, to concrete. The particles of silica fume are described to accelerate the hydration in concrete by acting as nucleating agents or secondary crystallisation sites. When normal concrete hardens, large crystals of calcium hydroxide are produced from the cement particle cores and these crystals migrate towards the aggregate particles. Also, calcium silicate hydrate, C-S-H gel, is formed. The strength of the concrete increases with time as the density of the C-S-H gel and calcium hydroxide crystals increases. When silica fume is present in the concrete mixture, the micro particles of silica fume act as cores for secondary crystallisation. These secondary crystals grow interactively between the large calcium hydroxide crystals, filling the gaps which initially exist between the cement and the aggregate, thus accelerating the hydration or hardening of the concrete.

Work published by M. Duriez in "Betonstein-Zeitung" Vol. 3, 1958, describes that the replacement of 2% cement with 2% crystallisation nuclei in concrete products accelerates hardening and increases the strength of the concrete. The crystallisation nuclei used are said to consist of hardened cement binders which have been cured under very specific conditions and subsequently comminuted back down to cement fineness. However, Duriez cautions that these crystallisation nuclei must be carefully selected otherwise they will be detrimental to the mechanical properties of the concrete.

Our research has shown that the addition of certain amounts of crushed material to the concrete mix provides the surprising, hitherto unknown, advantage of significantly increasing the depalleting strength of the concrete roof tiles. Thus, the invention provides an effective strength accelerator, as well as a convenient method of disposing of waste concrete which is favourable to the environment.

In particular, our work has shown that it is possible to obtain the surprising increase in depalleting strength described above by:
(i) using crushed waste concrete from, for example, crushed concrete roof tiles, as a replacement of new concrete roof tiles;
(ii) replacing a proportion of cement with finely crushed waste concrete in the preparation of new concrete roof tiles; and,
(iii) using crushed waste concrete comprising a mixture of the crushed waste concrete used as aggregate replacement material in (i) above and the finely crushed waste concrete used to replace cement in (ii) above.

The finely crushed waste material used as a cement replacement is believed to cause accelerated hardening by acting as a nucleating agent in the concrete used to produce the new concrete roof tiles.

However, the fact that finely crushed waste concrete roof tiles is capable of providing this result is unexpected in view of the specific conditions needed to cure the pastes which are used as nucleating agents, as described by Duriez. In addition, the strength of the roof tiles obtained has been found to be higher for mixtures provided by the present invention, than for mixtures containing other finely ground materials, for example, finely ground silica or silica flour.

Thus, the present invention provides a cementitious composition for the manufacture of concrete roof tiles with improved handling properties, said composition comprising:
(i) cementitious material, the weight of which being up to 30% of total weight of dry solids; and,
(ii) aggregate, the weight of which being at least 70% of total weight of dry solids; and wherein 1-20% of the aggregate comprises crushed waste concrete.

The present invention also provides a cementitious composition for the manufacture of concrete roof tiles with improved handling properties, said composition comprising:
(i) cementitious material, the weight of which being up to 30% of total weight of dry solids; and,
(ii) aggregate, the weight of which being at least 70% of total weight of dry solids; and wherein 0.1-10% of the aggregate comprises crushed waste concrete.

The present invention further provides a cementitious composition for the manufacture of concrete roof tiles with improved handling properties, said composition comprising:
(i) cementitious material, the weight of which being up to 30% of total weight of dry solids; and,
(ii) aggregate, the weight of which being at least 70% of total weight of dry solids; and wherein 0.1-20% of the aggregate comprises crushed waste concrete.

Preferably, the composition according to a first aspect of the invention comprises crushed waste concrete which has a granular composition such that 100% passes a 5.00 mm sieve, 98-100% passes a 3.35 mm sieve, 89-99% passes a 2.36 mm sieve, 64-95% passes a 1.18 mm sieve, 48-83% passes a 0.60 mm sieve, 22-51% passes a 0.30 mm sieve and 11-25% passes a 0.15 mm sieve.

It is particularly preferable that the composition according to the first aspect of the invention comprises crushed waste concrete which has a granular composition such that 100% passes a 5.00 mm sieve, 99-100% passes a 3.35 mm sieve, 97-99% passes a 2.36 mm sieve, 89-95% passes a 1.18 mm sieve, 72-83% passes a 0.60 mm sieve, 36-51% passes a 0.30 mm sieve and 13-25% passes a 0.15 mm sieve.

The composition according to a second aspect of the invention comprises crushed waste concrete which has a particle size of less than 75 µm; advantageously between 30 and 60 µm and particularly between 45 and 53 µm.

The composition according to a third aspect of the invention comprises crushed waste concrete which has a granular composition such that 100% passes a 4.75 mm sieve, 95-97% passes a 3.35 mm sieve, 87-90% passes a 2.36 mm sieve, 67-71% passes a 1.18 mm sieve, 47-49% passes a 0.6 mm sieve, 12-24% passes a 0.15 mm sieve and 4.5-20% passes a 0.075 mm sieve.

Preferably the composition according to the third aspect of the invention comprises crushed waste concrete which has a granular composition such that 100% passes a 4.75 mm sieve, 96-97% passes a 3.35 mm sieve, 88-90% passes a 2.36 mm sieve, 67-71% passes a 1.18 mm sieve, 45-49% passes a 0.6 mm sieve, 12-15% passes a 0.15 mm sieve and 4.5-10% passes a 0.075 mm sieve.

### Aggregates

Aggregates are conveniently provided by slate, crushed stone or sand or mixtures thereof, and, for example, they may comprise coarse slate and fine sand. Generally, coarse slate or sand can be defined as comprising particles of which not more than 30% by weight have a size of less than 0.15 mm. Fine slate or sand generally has more than 90% by weight of its particles having a size of less than 0.3 mm. The coarse slate may be supplied by Delabole Slate Quarries, Cornwall, England, or Redland Aggregates, Blaenau Ffestiniog, Wales and a useful material for the products of this invention is type S12 containing the following fractions:

**Table 1**

| Size (mm) | | % by weight |
|---|---|---|
| A | 2.36 | 0.1 |
| B | 1.18 | 9.0 |
| C | 0.60 | 61.1 |
| D | 0.30 | 26.3 |
| E | 0.15 | 1.3 |
| F | 0.075 | 0.3 |
| G | 0.053 | 0.6 |
| H | Less than 0.053 | 1.3 |

The aggregate may also comprise a low density aggregate such as vermiculite, perlite, hollow glass spheres and natural lightweight aggregate. This would have the advantage of reducing the weight of the product and in the case of a roofing slate this would reduce the load on the roof structure.

Suitable fine sand may contain the following:

**Table 2**

| Size (mm) | | % by weight |
|---|---|---|
| I | 0.3 - 0.15 | 50% |
| J | 0.15 - 0.09 | 25% |
| K | Less than 0.09 | 25% |

Other fine sands are available, such as Throtham 75 supplied by Buckland Sand and Silica Co., Reigate, Surrey. The preferred ratios of aggregate:cement by weight lie in the range 0.5:1 to 6:1. In general, preferred compositions have an aggregate:cement ratio of 3:1.

### Cement

The cements used in the compositions are conveniently hydraulic cements i.e. those which set and harden by the addition of water, that is, in the presence of water. The cement may be a silicate cement such as Portland Cement or it may be an aluminate cement. The compositions may include mixtures of different hydraulic cements.

The cementitious composition may comprise blast furnace slag, pulverised fuel ash or silica fume.

The silica fume, if used, preferably contains the following fractions:

| Size | | % by weight |
|---|---|---|
| A | Less than 0.05 microns | 20 |
| B | Less than 0.10 microns | 70 |
| C | Less than 0.20 microns | 95 |
| D | Less than 0.50 microns | 99 |

### Water

A weight ratio of water:cementitious material of 0.15:0.40 is usually preferred and advantageously the weight ratio of water to cement and/or cementitious material is just sufficient to provide adequate workability of the mix. Typically, the moisture content of compositions according to the various aspects of the present invention is 7.5 to 10% by weight of the dry solids included in the composition.

### Recycled Waste Concrete

This material is obtained by crushing broken or otherwise defective concrete products, for example concrete roof tiles, concrete blocks and concrete pavers using suitable crushing apparatus. Similarly, concrete products, viz. tiles from reroofed dwellings, etc., may also be used after crushing as aforesaid. Examples of typical gradings for the material used in the first aspect of the invention are given in Table 3:

**Table 3**

| Typical grading for crushed waste concrete used in the first aspect of the invention | | | | |
|---|---|---|---|---|
| Sieve Size (mm) | Percentage passing | | | |
| | Sample 1 | Sample 2 | Sample 3 | Sample 4 |
| 5.00 | 100 | 100 | 100 | 100 |
| 3.35 | 99 | 100 | 99 | 98 |
| 2.36 | 99 | 99 | 97 | 89 |
| 1.18 | 95 | 94 | 89 | 64 |
| 0.60 | 83 | 82 | 72 | 48 |
| 0.30 | 51 | 51 | 36 | 22 |
| 0.15 | 23 | 25 | 13 | 11 |

A typical grading for the crushed waste material used in the second aspect of the invention is given as sample 5 in Table 4. This material is prepared by comminuting waste concrete products to a particle size of less than 0.075 mm.

**Table 4**

| Typical grading for crushed waste concrete used in the second aspect of the invention | |
|---|---|
| Sample 5 | |
| Sieve Size mm | Cumulative % passing |
| 0.053 | 61 |
| 0.045 | 41 |
| Silt | 0.00 |

Examples of the gradings for the crushed waste material used in the third aspect of the invention are given in Table 5. This material has a higher proportion of fines material, i.e. material of particle size less than 0.075 mm, than any of samples listed in Table 3 above.

**Table 5**

| Typical grading for crushed waste concrete used in the third aspect of the invention | | | |
|---|---|---|---|
| Sieve size (mm) | Cumulative % Passing | | |
| | Sample 6 | Sample 7 | Sample 8 |
| 4.75 | 100 | 100 | 100 |
| 3.35 | 96.61 | 95.68 | 94.92 |
| 2.36 | 89.80 | 87.60 | 86.97 |
| 1.18 | 71.32 | 67.14 | 67.36 |
| 0.60 | 49.41 | 45.27 | 47.31 |
| 0.15 | 11.53 | 15.36 | 23.65 |
| 0.075 | 4.54 | 9.83 | 20.06 |
| Residue | 0.00 | 0.00 | 0.00 |

The invention will now be illustrated by way of example.
Examples 1 to 5 illustrate the invention according to its first aspect;
Examples 6 to 9 illustrate the invention according to its second aspect; and
Examples 10 to 19 illustrate the invention according to its third aspect.

### Examples relating to the first aspect of the invention

Examples 1 and 4 describe basic "control" concrete roof tile formulations which are of the type used generally in the art.

Examples 2, 3 and 5 illustrate formulations containing crushed waste concrete (CWC) according to the first aspect of the present invention.

The formulations describes in Examples 1, 2 and 3 were used to produce plain tiles by conventional roller and slipper tile making techniques; however, it will be appreciated that any tile profile can be made using any tile-making apparatus. The formulations described in Examples 4 and 5 were used to produce small test samples using laboratory scale apparatus.

The formulations used in Examples 1-5 are summarised in Table 6.

The cementitious compositions according to Examples 1-5 were prepared by mixing the dry components in conventional mixing apparatus for two minutes, followed by the addition of the liquid components (pigment and water) and further mixing for three minutes.

In Example 2, 5% of the sand was replaced by 5% of crushed waste concrete, graded according to sample 2 as given in Table 3.

In Example 3, 5% of the sand was replaced by 5% of crushed waste concrete, graded according to sample 3 given in Table 3, and the

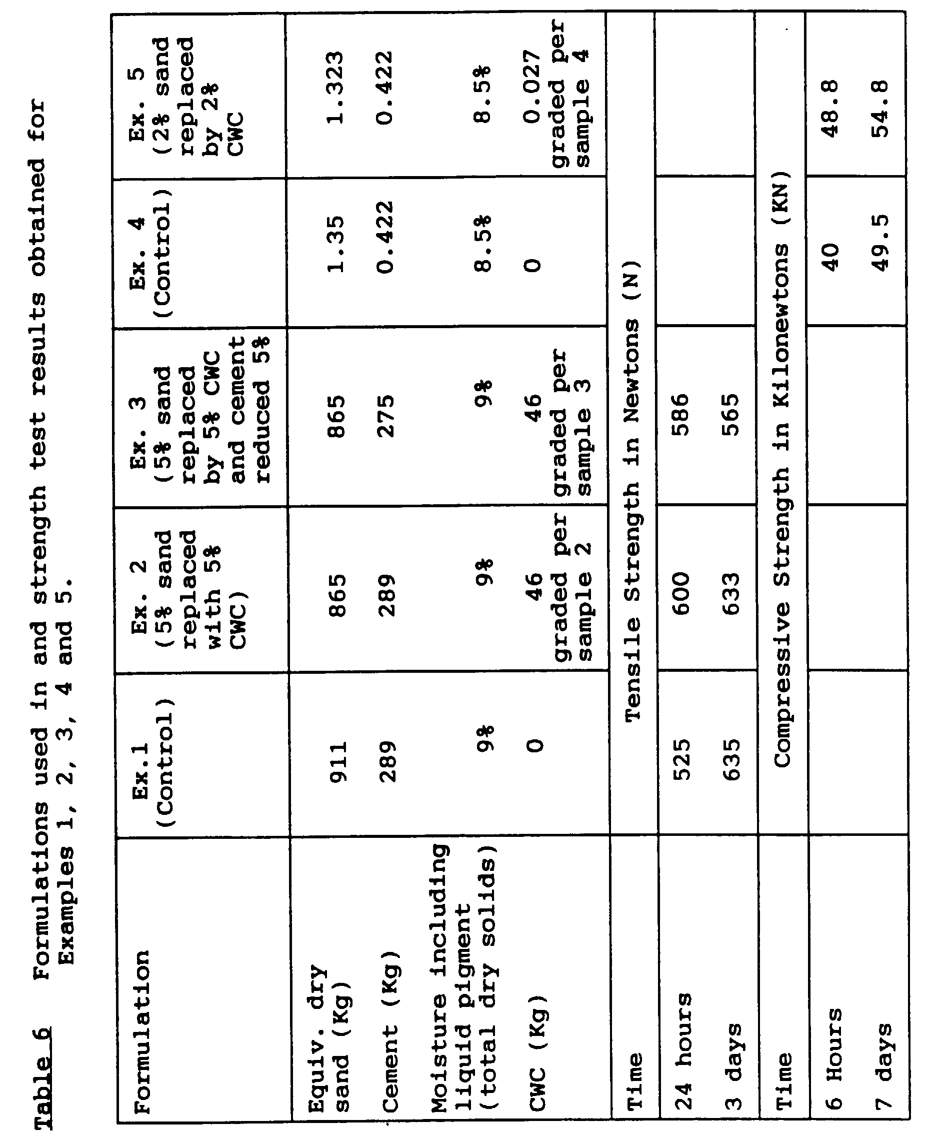

quantity of cement was reduced by 5%, as compared with the formulations in Examples 1 and 2.

The formulation according to Examples 5 was similar to the control Example 4 except that it had 2% of the sand replaced by 2% of crushed waste concrete.

### Tensile Strength Tests

Transverse tensile strength measurements for tiles prepared according to Examples 1, 2 and 3 were taken at 24 hours and 3 days under ambient laboratory conditions. The test used was similar to the 3-point loading test described in BS473550 tile standard 1990. The tensile strength test results are also presented in Table 6. These tests were conducted at 24 hours without pre-treatment with water, and at 3 days with pretreatment with water for 24 hours.

The test results illustrate that the tensile strength at 24 hours for tiles containing recycled concrete is increased by 14.3%. Similar increases in strength have been observed for tiles made, using similar tile formulations, at different tile-making plants. Similar strengths are observed for the Example 1 and the Example 2 formulations after 3 days.

The test results also illustrate, with reference to the strengths obtained for the Example 3 formulation, that the 14.3% increase in strength which is observed when crushed recycled concrete is added also permits a reduction in the amount of cement to be used in the mixture, whilst still enabling tiles to be made which have strengths fit for purpose.

### Compression Strength Tests

Compression strength measurements for the test samples prepared using the formulations described in Examples 4 and 5 were taken under ambient laboratory conditions at 6 hours, after curing at 60°C, and at 7 days. The compression test was carried out by subjecting cylindrical test pieces of the samples to an increasing compressive force until failure, using methods well known in the art. These results, also listed in Table 6, illustrate than an increase in strength of 22% is obtained after 6 hours, for mortar having a portion of the aggregate replaced by crushed concrete.

### Examples relating to the Second Aspect of the Invention

The formulation described in Example 6 is a control formulation and represents a typical cementitious composition used in the prior art.

The formulations described in Examples 7 and 8 are according to the second aspect of the present invention and contain a nucleating agent consisting of crushed concrete with a particle size of less than 75 µm; the grading of this material is given in Table 4. The formulation of Example 9 contains silica flour, also of particle size less than 75 µm. The purpose of Example 9 is to enable a comparison to be drawn between the properties of the composition of the present invention and the properties of a composition containing silica flour. Although silica flour is not expected to act as a nucleating agent, it has similar surface fineness to the nucleating agent contained in the composition according to the present invention.

**Table 7**

| Formulation (% of total composition | Example 6 | Example 7 | Example 8 | Example 9 |
|---|---|---|---|---|
| Sand | 69 | 69 | 69 | 69 |
| Cement | 23 | 22.5 | 22 | 22 |
| Water | 8 | 8 | 8 | 8 |
| Crushed concrete <75 µm) (as per sample 5) | - | 0.5 | 0.9 | - |
| Silica flour (<75 µm) | - | - | - | 0.9 |

Concrete roof tiles were prepared using formulations according to all of the Examples 6 to 9. The cement used was Portland cement, ex Rugby Rochester Works, and the fine sand was obtained from a sand quarry in the Kent valley area, sieved to less than 5 mm particle size.

The solid materials were mixed together in a Croker rotary pan mixer and then the water was added to the mixture. The resulting mortar mix was then fed to the hopper of a conventional roller and slipper tile forming machine from which "green state" flat tiles of approximately 450 x 200 x 12 mm were produced.

The "green state" tiles were then cured in a chamber under moist conditions at about 50°C and 98% relative humidity for about 6 hours. The cured tiles were removed from the chamber and stored indoors at about 20°C until tested.

### Flexural Strength Measurements

The flexural strength measurements for the tiles prepared according to the Examples 6 to 9 described above were obtained after 6 hours, 7 days and 28 days, using conventional apparatus and methods known in the art. The results of the flexural strength measurements are given in Table 8.

**Table 8**

| Time | Flexural Strength (MN/m²) | | | |
|---|---|---|---|---|
| | Example 6 | Example 7 | Example 8 | Example 9 |
| 6 hours | 5.7 | 6.2 | 5.8 | 4.4 |
| 7 days | 7.4 | 8.9 | 8.0 | 6.2 |
| 28 days | 8.7 | 9.8 | 10.0 | 7.3 |

From the results presented in Table 8 it may be noted that in Examples 7 and 8, the presence of a nucleating agent consisting of crushed waste concrete of particle size less than 75 µm causes an increase in the flexural strength at all ages when compared to the tiles prepared using the control formulation described in Example 6.

The flexural strength of tiles prepared according to Example 9 is observed to be lower than the control tiles of Example 6. This illustrates that not all fine powder additives can behave as nucleating agents which will cause an increase in the strength of cementitious compositions for the manufacture of concrete roof tiles, and that the increase in strength which is observed for tiles made using compositions of the present invention may not necessarily be obtained by using any material which has a particle size less than 75 µm.

### Examples relating to the Third Aspect of the Invention

Examples 11 to 17 illustrate the third aspect of the invention. Example 10 is a control formulation of the type used in the prior art.

The formulations according to Examples 11 to 13 have 6% of the aggregate (as compared with control Example 10) replaced with crushed waste concrete, the crushed waste concrete having the particle grading as detailed for sample 6.

The formulations according to Examples 14 to 16 have 6% of the aggregate, as compared with Example 10, replaced with crushed waste concrete having the particle grading as detailed for sample 7.

The formulations according to Examples 17 to 19 have 6% of the aggregate, as compared with Example 10, replaced with crushed waste concrete having the particle grading as detailed for sample 8.

In Examples 11, 14 and 17, experimental tiles were produced with 1% less cement by weight in the mix than the control formulation.

In Examples 12, 15 and 18, experimental tiles were produced with 2% less cement by weight in the mix than the control formulation. In Examples 13, 16 and 19, experimental tiles were produced with 4% less cement by weight in the mix than the control formulation.

The experimental conditions used to make the tiles according to Examples 10 to 19 are summarised as follows:

### Materials

Rugby Rochester rapid hardening Portland cement
Squerryes sand
Crushed concrete tile waste

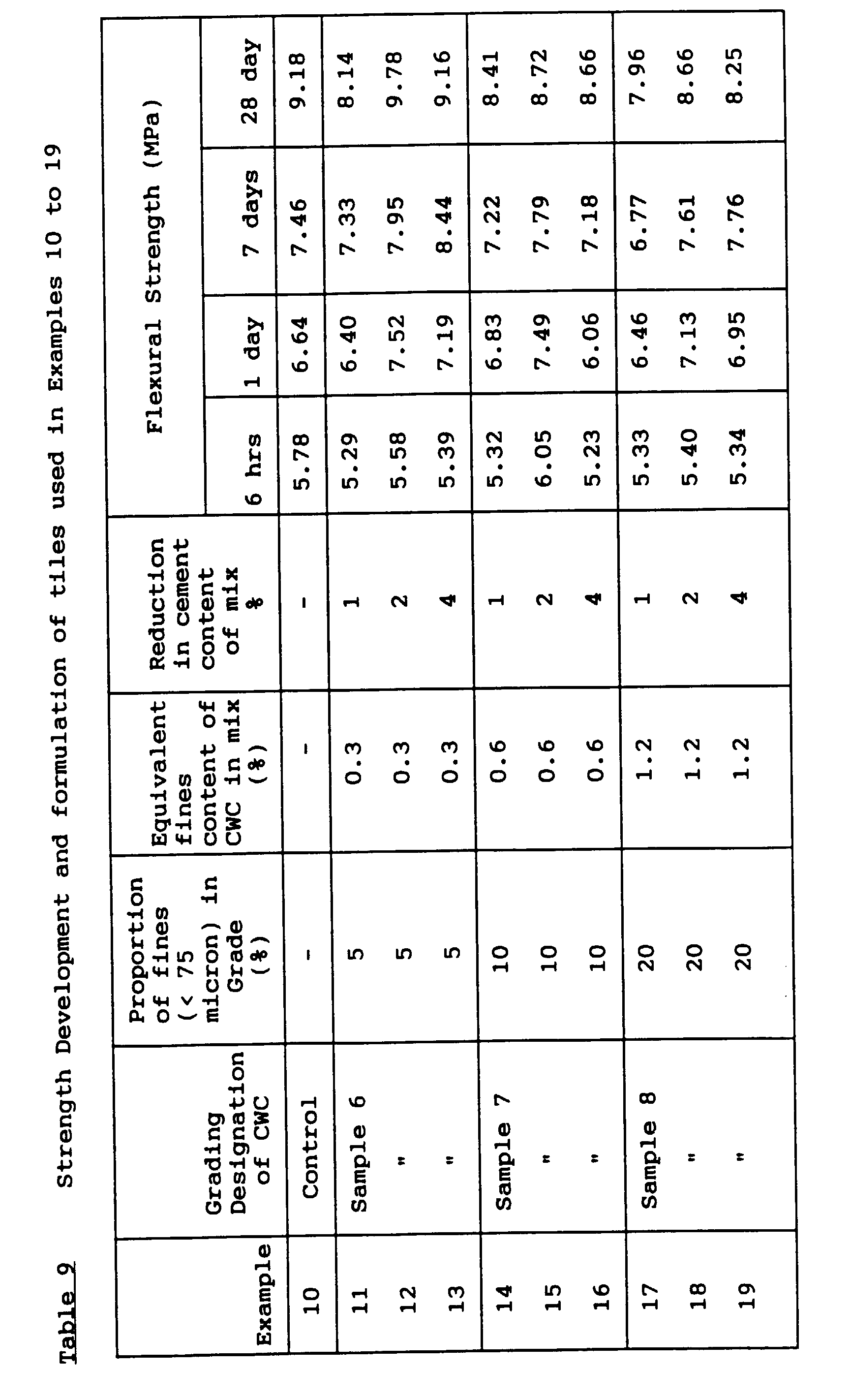

### Equipment

Croker mixer
Laboratory scale tile machine
Curing tank
Control temperature storage chamber
Zwick testing machine

### Tile Production

Tiles using standard aggregate to cement ratio (A/C 3:1), incorporating crushed waste concrete and lower cement contents as described in Table 9 were produced.

### Curing

The tiles were cured in a curing tank at 50°C and 98% RH (relative humidity) within 30 minutes from extrusion. Curing was terminated after 6 hours when the tiles were depalleted by hand and transferred into a storage chamber set at 25°C and 100% RH until tested.

### Testing

Flexural strength of whole half-tiles were measured on the Zwick testing machine. At least five tiles were tested for each condition at 6 and 24 hours, 7 and 28 days.

The flexural strength test results are also described in Table 9.

In summary, these results show that the flexural strength of the tiles made with the formulations of Examples 11 to 19, as compared with the formulation of Example 10, is not adversely affected by reducing the percentage of cement.

Indeed, the results show that in all cases, irrespective of the grading of the crushed waste concrete, the best strengths are obtained for the tiles made with formulations having a 2% cement reduction, that is, the formulations as per Examples 12, 15 and 18.

The strength of the tiles made with a 4% cement reduction, i.e. Examples 13, 16 and 19, were generally lower than the strength of the tiles made with a 2% cement reduction, i.e. Examples 12, 15 and 18, but the strengths of the 4% cement reduced tiles were generally higher than for the tiles with a 1% cement reduction, i.e. Examples 11, 14 and 17 respectively.

The general trend of the results shows that it is advantageous to use crushed recycled concrete which contains between 4.5% and 10% of material of particle size less than 0.075 mm in diameter.

It will be appreciated that the invention facilitates the use of a lower grade quality and possibly cheaper sand to produce tiles having desired strength, if this sand is supplemented with crushed waste concrete, in accordance with the invention.

## Claims

1. A cementitious composition for the manufacture of concrete roof tiles with improved handling properties, said composition comprising (i) cementitious material, the weight of which being up to 30% of total weight of dry solids; and (ii) aggregate, the weight of which being at least 70% of total weight of dry solids; and wherein 1-20% of the aggregate comprises crushed waste concrete.

2. A cementitious composition for the manufacture of concrete roof tiles with improved handling properties, said composition comprising (i) cementitious material, the weight of which being up to 30% of total weight of dry solids; and (ii) aggregate, the weight of which being at least 70% of total weight of dry solids; and wherein 0.1-10% of the aggregate comprises crushed waste concrete.

3. A cementitious composition for the manufacture of concrete roof tiles with improved handling properties, said composition comprising (i) cementitious material, the weight of which being up to 30% of total weight of dry solids; and (ii) aggregate, the weight of which being at least 70% of total weight of dry solids; and wherein 0.1-20% of the aggregate comprises crushed waste concrete.

4. A cementitious composition according to claims 1, 2 or 3 wherein 1-5% of the aggregate comprises crushed waste concrete.

5. A cementitious composition according to claims 1 to 4 wherein the crushed waste concrete comprises a nucleating agent.

6. A cementitious composition according to claim 5 wherein the nucleating agent is formed from crushed waste concrete.

7. A cementitious composition according to claim 6 wherein the crushed waste concrete comprises fractions thereof having a particle size less than 0.075 mm.

8. A cementitious composition according to claim 7 wherein the crushed waste concrete comprises fractions thereof having a particle size of between 0.03 and 0.06 mm.

9. A cementitious composition according to claim 8 wherein the crushed waste concrete comprises fractions thereof having a particle size of between 0.045 and 0.053 mm.

10. A cementitious composition according to any one of claims 1 to 4 wherein the crushed waste concrete has a granular composition such that 100% passes a 5.00 mm sieve, 98-100% passes a 3.35 mm sieve, 89-99% passes a 2.36 mm sieve, 64-95% passes a 1.18 mm sieve, 48-83% passes a 0.60 mm sieve, 22-51% passes a 0.30 mm sieve and 11-25% passes a 0.15 mm sieve.

11. A cementitious composition according to any one of claims 1 to 4 wherein the crushed waste concrete has a granular composition such that 100% passes a 5.00 mm sieve, 99-100% passes a 3.35 mm sieve, 97-99% passes a 2.36 mm sieve, 89-95% passes a 1.18 mm sieve, 72-83% passes a 0.60 mm sieve, 36-51% passes a 0.30 mm sieve and 13-25% passes a 0.15 mm sieve.

12. A cementitious composition according to any one of claims 1 to 4 wherein the crushed waste concrete has a granular composition such that 100% passes a 4.75 mm sieve, 95-97% passes a 3.35 mm sieve, 87-90% passes a 2.36 mm sieve, 67-71% passes a 1.18 mm sieve, 47-49% passes a 0.60 mm sieve, 12-24% passes a 0.15 mm sieve and 4.5-20% passes a 0.075 mm sieve.

13. A cementitious composition according to any one of claims 1 to 4 wherein the crushed waste concrete has a granular composition such that 100% passes a 4.75 mm sieve, 96-97% passes a 3.35 mm sieve, 88-90% passes a 2.36 mm sieve, 67-71% passes a 1.18 mm sieve, 45-49% passes a 0.60 mm sieve, 12-15% passes a 0.15 mm sieve and 4.5-10% passes a 0.075 mm sieve.

14. A cementitious composition according to claim 5 having a moisture content of 7.5 to 10% by weight of the dry solids included in the composition.

15. A cementitious composition according to Claim 14 wherein the moisture content is 8 to 9.5% by weight of the dry solids included in the composition.

## Patentansprüche

1. Zementartige Zusammensetzung für die Herstellung von Betondachsteinen mit verbesserten Handhabungseigenschaften, wobei die Zusammensetzung (i) zementartiges Material, wobei dessen Gewicht bis zu 30 Gew.-%, bezogen auf Gesamttrockensubstanz, beträgt, und (ii) Zuschlagstoff umfaßt, wobei dessen Gewicht mindestens 70 Gew.-%, bezogen auf Gesamttrockensubstanz, beträgt; und bei der 1 - 20% des Zuschlagstoffs zerkleinerten Betonabfall umfassen.

2. Zementartige Zusammensetzung für die Herstellung von Betondachsteinen mit verbesserten Handhabungseigenschaften, wobei die Zusammensetzung (i) zementartiges Material, wobei dessen Gewicht bis zu 30 Gew.-%, bezogen auf Gesamttrockensubstanz, beträgt, und (ii) Zuschlagstoff umfaßt, wobei dessen Gewicht mindestens 70 Gew.-%, bezogen auf Gesamttrockensubstanz, beträgt; und bei der 0,1 - 10% des Zuschlagstoffs zerkleinerten Betonabfall umfassen.

3. Zementartige Zusammensetzung für die Herstellung von Betondachsteinen mit verbesserten Handhabungseigenschaften, wobei die Zusammensetzung (i) zementartiges Material, wobei dessen Gewicht bis zu 30 Gew.-%, bezogen auf Gesamttrockensubstanz, beträgt, und (ii) Zuschlagstoff umfaßt, wobei dessen Gewicht mindestens 70 Gew.-%, bezogen auf Gesamttrockensubstanz, beträgt; und wobei 0,1 - 20% des Zuschlagstoffs zerkleinerten Betonabfall umfassen.

4. Zementartige Zusammensetzung nach Anspruch 1, 2 oder 3, bei der 1 - 5% des Zuschlagstoffs zerkleinerten Betonabfall umfassen.

5. Zementartige Zusammensetzung nach den Ansprüchen 1 bis 4, bei der der zerkleinerte Betonabfall einen Keimbildner umfaßt.

6. Zementartige Zusammensetzung nach Anspruch 5, bei der der Keimbildner aus zerkleinertem Betonabfall gebildet ist.

7. Zementartige Zusammensetzung nach Anspruch 6, bei der der zerkleinerte Betonabfall Anteile mit einer Teilchengröße von weniger als 0,075 mm umfaßt.

8. Zementartige Zusammensetzung nach Anspruch 7, bei der der zerkleinerte Betonabfall Anteile mit einer Teilchengröße von zwischen 0,03 und 0,06 mm umfaßt.

9. Zementartige Zusammensetzung nach Anspruch 8, bei der der zerkleinerte Betonabfall Anteile mit einer Teilchengröße von zwischen 0,045 und 0,053 mm umfaßt.

10. Zementartige Zusammensetzung nach einem der Ansprüche 1 bis 4, bei der die Korngrößenverteilung des zerkleinerten Betonabfalls derart ist, daß 100% durch ein 5,00 mm-Sieb, 98 - 100% durch ein 3,35 mm-Sieb, 89 - 99% durch ein 2,36 mm-Sieb, 64 - 95% durch ein 1,18 mm-Sieb, 48 - 83% durch ein 0,60 mm-Sieb, 22 - 51% durch ein 0,30 mm-Sieb und 11 - 25% durch ein 0,15 mm-Sieb hindurchgehen.

11. Zementartige Zusammensetzung nach einem der Ansprüche 1 bis 4, bei der die Korngrößenverteilung des zerkleinerten Betonabfalls derart ist, daß 100% durch ein 5,00 mm-Sieb, 99 - 100% durch ein 3,35 mm-Sieb, 97 - 99% durch ein 2,36 mm-Sieb, 89 - 95% durch ein 1,18 mm-Sieb, 72 - 83% durch ein 0,60 mm-Sieb, 36 - 51% durch ein 0,30 mm-Sieb und 13 - 25% durch ein 0,15 mm-Sieb hindurchgehen.

12. Zementartige Zusammensetzung nach einem der Ansprüche 1 bis 4, bei der die Korngrößenverteilung des zerkleinerten Betonabfalls derart ist, daß 100% durch ein 4,75 mm-Sieb, 95 - 97% durch ein 3,35 mm-Sieb, 87 - 90% durch ein 2,36 mm-Sieb, 67 - 71% durch ein 1,18 mm-Sieb, 47 - 49% durch ein 0,60 mm-Sieb, 12 - 24% durch ein 0,15 mm-Sieb und 4,5 - 20% durch ein 0,075 mm-Sieb hindurchgehen.

13. Zementartige Zusammensetzung nach einem der Ansprüche 1 bis 4, bei der die Korngrößenverteilung des zerkleinerten Betonabfalls derart ist, daß 100% durch ein 4,75 -Sieb, 96 - 97% durch ein 3,35 mm-Sieb, 88 - 90% durch ein 2,36 mm-Sieb, 67 - 71% durch ein 1,18 mm-Sieb, 45 - 49% durch ein 0,60 mm-Sieb, 12 - 15% durch ein 0,15 mm-Sieb und 4,5 - 10% durch ein 0,075 mm-Sieb hindurchgehen.

14. Zementartige Zusammensetzung nach Anspruch 5 mit einem Feuchtigkeitsgehalt von 7,5 bis 10 Gew.-%, bezogen auf in der Zusammensetzung enthaltene Trockensubstanz.

15. Zementartige Zusammensetzung nach Anspruch 14, bei der der Feuchtigkeitsgehalt 8 bis 9,5 Gew.-%, bezogen auf in der Zusammensetzung enthaltene Trockensubstanz, ist.

## Revendications

1. Composition cimenteuse pour la fabrication de tuiles en béton ayant des propriétés de manipulation améliorées, ladite composition comprenant (i) un matériau cimenteux, dont le poids constitue jusqu'à 30 % du poids total de matières sèches ; et (ii) un granulat, dont le poids constitue au moins 70 % du poids total de matières sèches ; et dans laquelle 1 à 20 % du granulat comprend du béton de rebut broyé.

2. Composition cimenteuse pour la fabrication de tuiles en béton ayant des propriétés de manipulation améliorées, ladite composition comprenant (i) un matériau cimenteux, dont le poids constitue jusqu'à 30 % du poids total de matières sèches ; et (ii) un granulat, dont le poids constitue au moins 70 % du poids total de matières sèches ; et dans laquelle 0,1 à 10 % du granulat comprend du béton de rebut broyé.

3. Composition cimenteuse pour la fabrication de tuiles en béton ayant des propriétés de manipulation améliorées, ladite composition comprenant (i) un matériau cimenteux, dont le poids constitue jusqu'à 30 % du poids total de matières sèches ; et (ii) un granulat, dont le poids constitue au moins 70 % du poids total de matières sèches ; et dans laquelle 0,1 à 20 % du granulat comprend du béton de rebut broyé.

4. Composition cimenteuse selon les revendications 1, 2 ou 3, dans laquelle 1 à 5 % du granulat comprend du béton de rebut broyé.

5. Composition cimenteuse selon les revendications 1 à 4, dans laquelle le béton de rebut broyé comprend un agent de nucléation.

6. Composition cimenteuse selon la revendication 5, dans laquelle l'agent de nucléation est formé de béton de rebut broyé.

7. Composition cimenteuse selon la revendication 6, dans laquelle le béton de rebut broyé comprend des fractions qui ont une dimension de particules inférieure à 0,075 mm.

8. Composition cimenteuse selon la revendication 7, dans laquelle le béton de rebut broyé comprend des fractions qui ont une dimension de particules entre 0,03 et 0,06 mm.

9. Composition cimenteuse selon la revendication 8, dans laquelle le béton de rebut broyé comprend des fractions qui ont une dimension de particules entre 0,045 et 0,053 mm.

10. Composition cimenteuse selon l'une quelconque des revendications 1 à 4, dans laquelle le béton de rebut broyé a une composition granulaire telle que 100 % passe un tamis de 5,00 mm, 98 à 100 % passe un tamis de 3,35 mm, 89 à 99 % passe un tamis de 2,36 mm, 64 à 95 % passe un tamis de 1,18 mm, 48 à 83 % passe un tamis de 0,60 mm, 22 à 51 % passe un tamis de 0,30 mm et 11 à 25 % passe un tamis de 0,15 mm.

11. Composition cimenteuse selon l'une quelconque des revendications 1 à 4, dans laquelle le béton de rebut broyé a une composition granulaire telle que 100 % passe un tamis de 5,00 mm, 99 à 100 % passe un tamis de 3,35 mm, 97 à 99 % passe un tamis de 2,36 mm, 89 à 95 % passe un tamis de 1,18 mm, 72 à 83 % passe un tamis de 0,60 mm, 36 à 51 % passe un tamis de 0,30 mm et 13 à 25 % passe un tamis de 0,15 mm.

12. Composition cimenteuse selon l'une quelconque des revendications 1 à 4, dans laquelle le béton de rebut broyé a une composition granulaire telle que 100 % passe un tamis de 4,75 mm, 95 à 97 % passe un tamis de 3,35 mm, 87 à 90 % passe un tamis de 2,36 mm, 67 à 71 % passe un tamis de 1,18 mm, 47 à 49 % passe un tamis de 0,60 mm, 12 à 24 % passe un tamis de 0,15 mm et 4,5 à 20 % passe un tamis de 0,075 mm.

13. Composition cimenteuse selon l'une quelconque des revendications 1 à 4, dans laquelle le béton de rebut broyé a une composition granulaire telle que 100 % passe un tamis de 4,75 mm, 96 à 97 % passe un tamis de 3,35 mm, 88 à 90 % passe un tamis de 2,36 mm, 67 à 71 % passe un tamis de 1,18 mm, 45 à 49 % passe un tamis de 0,60 mm, 12 à 15 % passe un tamis de 0,15 mm et 4,5 à 10 % passe un tamis de 0,075 mm.

14. Composition cimenteuse selon la revendication 5, ayant une teneur en eau de 7,5 à 10 % en poids des matières sèches incluses dans la composition.

15. Composition cimenteuse selon la revendication 14, dans laquelle la teneur en eau est de 8 à 9,5 % en poids des matières sèches incluses dans la composition.
